# EUROPÄISCHE PATENTSCHRIFT

(11) **EP 0 705 455 B1**
(45) Veröffentlichungstag und Bekanntmachung des Hinweises auf die Patenterteilung: **30.07.1997**
(21) Anmeldenummer: 94913595.8
(22) Anmeldetag: 13.04.1994
(51) Int. Cl.: G04G 1/00, G04G 11/00

(54) **DATENAUFZEICHNUNGSGERÄT**
DATA RECORDING DEVICE
DISPOSITIF D'ENREGISTREMENT DE DONNEES

(30) Priorität: 14.04.1993 DE 9305576 U
(43) Veröffentlichungstag der Anmeldung: 10.04.1996
(73) Patentinhaber: HOLZRICHTER, Dieter, D-22391 Hamburg (DE)
(72) Erfinder: HOLZRICHTER, Dieter, D-22391 Hamburg (DE)
(74) Vertreter: Richter, Werdermann & Gerbaulet
(86) Internationale Anmeldenummer: EP9401148
(87) Internationale Veröffentlichungsnummer: WO9424617

(56) Entgegenhaltungen:
- GB-A- 2 067 317
- GB-A- 2 080 983
- US-A- 4 459 036

## Beschreibung

Die Erfindung betrifft ein Datenaufzeichnungsgerät mit ersten Mitteln zum Aufzeichnen und Abrufen von Daten, zweiten Mitteln zum Löschen von aufgezeichneten Daten, sowie Bedienelementen zum Steuern des Aufzeichnungs-, Abruf- und Löschvorganges, einer mit einem akustischen Signalgeber gekoppelten Zeitschaltuhr mit einer Zeiteinstellung, und dritten Mitteln, welche eine Aktivierung des Löschvorganges von abgespeicherten Daten von einer zusätzlich erfüllten Bedingung abhängig machen.

Durch die US-A-4,459,036 ist eine elektronische Vorrichtung für die Handhabung programmierter Daten bekannt, die einen Speicher für die Speicherung von programmierten Zeiten und Programmdaten, einen Zeitgeberkreis für die Erzeugung von Zeitsignalen, einen Vergleicher für die Erzeugung eines Vergleichssignals als Reaktion auf den Vergleich und die Übereinstimmung der vom Zeitgeberkreis ausgehenden Zeitsignale mit der programmierten Zeit, einen Selektivspeicher mit einer Speicherung eines Signals für die Entscheidung für oder gegen das Löschen der programmierten Zeit und der Daten im Speicher und eine Steuereinheit für die Selektion der Signalspeicherung im Selektivspeicher als Reaktion auf den das Vergleichssignal erzeugenden Vergleicher zur Steuerung des Löschens und Nicht-Löschens der programmierten Zeit und der Proqrammdaten im Speicher umfaßt. Um bei einem achtlosen Bedienen einer Betätigungstaste den Speicherinhalt nicht zu löschen,weist diese elektronische Vorrichtung des weiteren Mittel für die Erzeugung eines Zugangssignals, Speichermittel mit jeweils ersten Speicherstellen für die Speicherung von Dateninformationen und zweite Speicherstellen, von denen jede mit einer der ersten Speicherstellen verbunden ist und zur Speicherung festgelegter Informationen für die Entscheidung für oder gegen das Löschen der Dateninformation, die in der mit ihr verbundenen ersten Speicherstelle gespeichert sind, dient, wobei die Speichermittel außerdem Dateninformationen als Reaktion auf ein von den Erzeugungsmitteln erzeugtes Zugangssignal in die ersten Speicherstellen oder aus diesen heraus lesen oder schreiben, und auf eine Anweisung für das Löschen der in einer der ersten Speicherstellen gespeicherten Dateninformationen reagierende Steuermittel für die Steuerung der Entscheidung für oder gegen das Löschen einer der ersten Speicherstellen in den Speichermitteln entsprechend dem Vorhandensein oder Nicht-Vorhandensein der festgelegten Informationen,die in der zweiten Speicherstelle, mit der eine erste Speicherstelle verbunden ist,gespeichert sind,auf.

Diese elektronische Vorrichtung umfaßt nicht nur einen Rechner, sondern ist mit einem Speicher für eine Terminzeit und Termindetails versehen, so daß sie als Datenaufzeichnungsgerät eingesetzt werden kann, auch wenn eine Sprachaufzeichnung nicht möglich ist. Wesentlich ist jedoch, daß diese Vorrichtung keine Löschsperre aufweist. Zu jedem im Speicher abgelegten Dateninhalt werden vielmehr Zusatzinformationen mit abgespeichert, die von vornherein festlegen, ob der Speicherinhalt bei einem Betätigen der Lösch- und Resettaste gelöscht wird oder nicht. Die Zusatzinformation kann dabei entweder durch eine spezielle Taste vom Bediener bewußt eingegeben oder sie kann automatisch mittels eines Diskriminators erzeugt werden, der je nach Speicherinhalt ein Sperrsignal erzeugt und abspeichert oder nicht. In einem Fall ist eine bewußte Entscheidung des Bedieners notwendig, der aufgrund des abgespeicherten Dateninhalts eine Löschsperre vorgibt oder nicht. Im anderen Fall steuert der Dateninhalt automatisch die Sperrfunktion. In beiden Fällen ist die Sperrung der Löschung eine Funktion des Dateninhalts. Die Löschsperre ist somit mit dem Dateninhalt verknüpft.

Die GB-A-2 080 983 beschreibt eine Tastenschaltanordnung für das Auslösen einer optischen Anzeigevorrichtung,z.B. einer Quarzuhr, wobei der Anzeigebereich der Anzeigevorrichtung einen Abschnitt der vorderen Deckfläche des Gehäuses bildet und die vordere Deckfläche mit Öffnungen für federbelastete Tastschalter versehen ist. Die Auslöseflächen eines jeden Tastschalters sind dabei so bemessen, daß sie im wesentlichen dem restlichen Teil der Oberfläche der vorderen Deckfläche entsprechen,der nicht vom visuellen Anzeigebereich eingenommen wird. Die restliche Oberfläche wird außerhalb des Anzeigebereichs vollständig oder fast vollständig von den Auslöseflächen der Tastschalter eingenommen. Die Auslöseflächen können somit in attraktiver Weise angeordnet oder gruppiert werden und so bemessen sein, daß eine einfache Handhabung gewährleistet ist, ohne daß der Position des Tastschalterkörpers, der den elektrischen Kontakt herstellt, besondere Beachtung geschenkt werden muß. Dadurch soll es möglich sein, die Auslösefläche des Tastschalters im wesentlichen an jeder Stelle zu drücken, so daß auch eine exzentrische Auslösung den gewünschten Kontakt herstellt. Dabei ist die vordere Deckfläche eines Gehäuses für die visuelle Anzeigevorrichtung in zwei Abschnitte unterteilt. Der erste Abschnitt, der bevorzugterweise zentral angeordnet ist, wird dabei durch den Anzeigebereich der Anzeigevorrichtung gebildet. Der zweite Abschnitt, die restliche Oberfläche, wird im wesentlichen durch mit Tastschaltern bestückte Auslöseflächen zum Auslösen der optischen Anzeigevorrichtung gebildet. Die vordere Deckfläche des Gehäuses ist kreisförmig, und die Ecken eines quadratischen Anzeigebereichs liegen auf oder nahe der Grenzlinie der vorderen Deckfläche des Gehäuses, so daß vier Segmente eines Kreises als Auslöseflächen der Tastschalter verbleiben.

Eine elektronische Alarmuhr mit einer Funktion für gesprochene Nachrichten beschreibt die GB-A-2 067 317. Diese elektronische Alarmuhr mit einer digitalen Zeitanzeige hat Anordnungen für den Empfang gesprochener Nachrichten, für die Umwandlung des betreffenden analogen Signals in eine digitale Form und für die Speicherung einer Nachricht in einem Halbleiterspeicher in digital codierter Form. Jede Nachricht wird dabei zur entsprechenden Zeit akustisch ausgelesen. Mehrere solcher Alarmzeiten werden vorher eingestellt. Außerdem kann sich der Benutzer durch das Bedienen eines Schaltermittels die gespeicherten Nachrichten nacheinander bei gleichzeitiger visueller Anzeige der Alarmzeiten in sprachlicher Form auslesen lassen, wobei ein Lautsprecher auch als Mikrofon dient. Damit soll eine elektronische Vorrichtung mit einer Uhrenfunktion geschaffen werden, die es ermöglicht zu erkennen, zu welchem Zweck eine Alarmazeit eingestellt worden ist, indem eine der Alarmzeit zugeordnete Stimme aufgezeichnet wird, die dann als Alarm zur Alarmzeit ertönt, wobei der Bediener der Alarmuhr vorher bestätigen kann, welche Art von Stimme zur Alarmzeit erzeugt wird. Hiernach umfaßt die elektronische Vorrichtung mit einer Uhrenfunktion Speichermittel für die Alarmzeit für die Speicherung von Alarmzeiten, Mittel für den Empfang einer von außen eingehenden Stimme, Speichermittel für Stimminformationen für die Speicherung von Stimminformationen, die durch die Empfangsmittel als digital codierte Informationen empfangen werden, erste Tonerzeugungsmittel für das Auslesen der Stimminformationen, die in den Speichermitteln für Stimminformationen gespeichert sind, um zu den Alarmzeiten, die in den Speichermitteln für die Alarmzeiten gespeichert sind, Töne zu erzeugen, externe Schalter für die Lieferung von Anweisungen für das Auslesen der Stimminformationen, und zweite Tonerzeugungsmittel für das Auslesen der Stimminformationen, die in den Speichermitteln für Stimminformationen gespeichert sind, um bei Bedienen der externen Schalter eine Stimme zu erzeugen, aufweist. Mit einer derartigen Konstruktion wird der Zweck der Alarmzeit durch einfaches Hören des Alarmtones leicht verständlich. Durch Bedienen der externen Schalter werden die Alarmtöne der Alarmzeiten entsprechend der Reihenfolge der Alarmzeiten nacheinander erzeugt. Entsprechend ist es möglich zu erkennen, welche Art von Stimme zur Bestätigung des Tagesplanes erzeugt wird. Außerdem ist es möglich zu bestätigen, ob die Aufzeichnung korrekt ausgeführt worden ist, indem die aufgezeichneten Informationen durch Bedienen der externen Schalter nach der Aufzeichnung der Stimmalarmsignale erzeugt werden.

Auch die DE-A-24 10 445 beschreibt eine Alarmuhr, insbesondere als Alarm-Armbanduhr , die neben dem Uhrantrieb im Uhrengehäuse noch einen Lautsprecher besitzt, der mit einer Tonerzeugungsvorrichtung sowie entsprechenden Schaltmitteln verbunden ist. Hierzu dient eine am Uhrengehäuse abgestützte Membran, an der eine als zylindrischer Ring ausgebildete Spule befestigt ist, die von einem am Gehäuserand festliegendem zylindrischen Dauermagneten umgeben ist. Als Tonerzeugungsvorrichtung ist ein miniaturisiertes Tonbandgerät mit Endlosbandspule oder ein Radioempfangsgerät vorgesehen.

Des weiteren sind auch kleine Diktiergeräte für Magnetbandkassetten, die als Handgerät ausgebildet und mittels eines Schiebeschalters für unterschiedliche Funktionsabläufe einstellbar sind bekannt.Nach der DE-U1 80 32 508.2 wird auch schon vorgeschlagen, dieses Gerät weiterhin zu minimieren, so daß es im wesentlichen den Umrissen der Magnetbandaufzeichnungskassette entspricht und der Schiebeschalter an der schmalen Längsseite angeordnet ist. Dieses Gerät besitzt ferner eine Digitaluhr, in die eine Uhrzeit eingegeben werden kann, zu der im Tonverstärker des Gerätes ein Wecksignal ausgelöst wird. Dieses Wecksignal löst gleichzeitig oder mit einer vorgegebenen kurzen Verzögerung über einen weiteren Zeichenausgang der Digitaluhr den Antrieb des Gerätes auf langsamen Vorlauf zur Wiedergabe eines auf das Tonband aufgesprochenen Textes über den Lautsprecher aus.

Auf diese Weise soll das Diktiergerät auch als akustisches Notizbuch dienen.

Auch die DE-A-32 43 438 A1 behandelt eine elektronische Uhr, die die Aufgabe löst, daß die abgegebenen Wecktöne es dem Benutzer das Erkennen ermöglichen soll, sich an einen bestimmten Vorgang zu erinnern. Die Nachricht oder Notiz wird als Sprachsignal wiedergegeben, was durch Verwendung von Digitalanalogumsetzern in Verbindung mit entsprechenden Filterschaltungen möglich wird.

Die DE-A-35 38 829 A1 schlägt ein mit einer Armbanduhr kombiniertes bzw. in ihr integriertes miniaturisiertes Diktiergerät vor, dessen Tastenfeld zusätzlich als drahtloses Fernsprechgerät und/oder Rechner ausgebildet sein kann.

Die bisher vorgeschlagenen Geräte lassen sich grundsätzlich in zwei Gruppen einteilen, die der Diktiergeräte und die der Uhrenweckfunktionen. Eine Uhr, die zu einer voreingestellten Zeit ein Alarmsignal abgibt, läßt jedoch nicht erkennen, woran das Wecksignal erinnern soll. Die Uhr nach der DE-A- 32 43 438 A1 schafft hier zwar dadurch Abhilfe, daß das Alarmsignal die Wiedergabe einer Sprachaufzeichnung ist, jedoch ist diese Wiedergabe stets dann unbefriedigend, wenn sie zu einer unerwünschten Gelegenheit, wie z.B. während Vorträgen oder Konferenzen erfolgt.

Es ist daher Aufgabe der vorliegenden Erfindung, ein Datenaufzeichnungsgerät der eingangs beschriebenen Art dahingehend weiter zu entwickeln bzw. zu schaffen, daß es als Terminplaner einsetzbar ist.

Diese Aufgabe wird bei einem eingangs genannten Datenaufzeichnungsgerät mit den im Anspruch 1 angegebenen Merkmalen gelöst.

Mit einem derart ausgebildeten Gerät ist es möglich, die Löschtaste oder die Löschfunktion bis nach dem Datenabruf zu sperren. Nur dann, wenn der Benutzer des Gerätes die aufgezeichneten Daten tatsächlich zu der vorgegebenen Zeit abgerufen hat, kann der Speicher neu überschrieben werden. Dies schließt nicht aus, daß, insbesondere für den Fall einer Fehleingabe, das Gerät eine Reset-Taste hat, die jedoch gegen unbeabsichtigtes Auslösen besonders gesichert sein sollte, sei es, daß sie an einem gesicherten Ort liegt, der von außen nicht ohne weiteres zugänglich ist oder sei es, daß bestimmte Tastenkombinationen angewählt werden müssen, um die Reset-Funktion auszulösen.

Nach einer Weiterbildung der Erfindung ist jede Datenaufzeichnung mit einer vorgebbaren Zeit abspeicherbar, zu der der akustische Signalgeber durch eine Zeitschaltung aktiviert, und/oder wobei die Datenaufzeichnung individuell bis zu ihrem Abruf gegen ein versehentliches Löschen gesperrt ist. Diese Maßnahme perfektioniert den Terminplaner noch dahingehend, daß einzelne Datenaufzeichnungen mit Zeiteingaben koppelbar und als solche getrennt speicherbar und abrufbar sind. Auf diese Weise ist eine Möglichkeit geschaffen, in dem "vokalen Terminplan" auch Eintragungen separat löschen bzw. umtragen zu können, etwa auf einen anderen Zeitpunkt.

Akustische Signalgeber haben häufig den Nachteil, daß sie störend für anwesende Personen sind. Eine Reduzierung der Lautstärke des akustischen Signals minimiert zwar die Störung, löst jedoch nicht das Problem. Eine optische Signalabgabe zu einer bestimmten Zeit kann die Aufgabe der Weck- oder Alarmfunktion jedoch nicht erfüllen, da dann vorausgesetzt werden müßte, daß der Benutzer das Datenaufzeichnungsgerät zum Alarmzeitpunkt betrachtet. Um dennoch, ggf. zusätzlich, dem Benutzer einen Terminhinweis zu geben, ist nach einer weiteren Ausgestaltung der Erfindung vorgesehen, daß eine Anzeige für noch nicht abgerufene Daten vorgesehen ist. Auf diese Art und Weise bleibt die Terminmeldung auch noch dann erhalten, wenn der Vorwarnzeitpunkt abgelaufen ist.

Prinzipiell kann auf alle Aufzeichnungsarten zurückgegriffen werden, im Hinblick auf eine Miniaturisierung des Gerätes wird jedoch ein Analog-Digital-Wandler (A/D-Wandler) und ein hiermit gekoppelter Speicher für digitale Signale vorgezogen. Weiterhin vorzugsweise wird das Gerät als Handgerät ausgebildet sein, insbesondere auch netzunabhängig durch eine Batterie oder einem Akkumulator betreibbar. Um bei der Miniaturisierung des Gerätes keine Einbußen beim Bedienungskomfort in Kauf nehmen zu müssen, sind breite Stellgliedfunktionstasten oder -schieber vorgesehen, die der Dicke oder Draufsichtbreite des Gerätes im wesentlichen entsprechen. Wird das Datenaufzeichnungsgerät nach einer weiteren Ausgestaltung der Erfindung mit einem Armband versehen und als am Handgelenk tragbare Ausführungsform ausgebildet, kann hierdurch ermöglicht werden, daß z.B. während des Autofahrens mit dem Kinn die Funktionstaste oder der Schalter bewegt wird, um eine Datenaufzeichnung aufzunehmen.

Weitere Ausgestaltungen der Erfindung sind Gegenstand der Unteransprüche.

Ausführungsbeispiele der Erfindung sind in den Zeichnungen dargestellt. Es zeigen
- Fig. 1 und 2: jeweils eine Drauf- und eine Seitenansicht eines Handdatenaufzeichnungsgerätes und
- Fig. 3: ein Datenaufzeichnungsgerät in Form einer Armbanduhr.

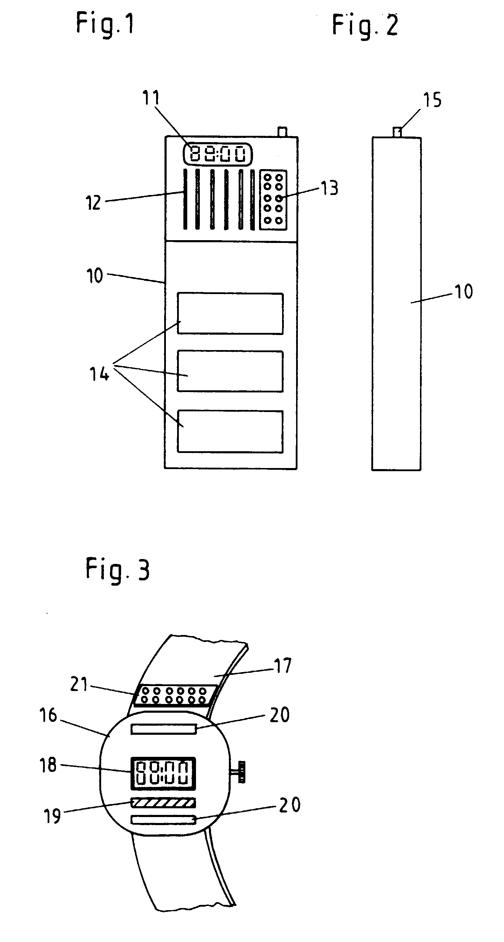

Das Datenaufzeichnungsgerät nach Fig. 1 und 2 besitzt ein Gehäuse 10 zur Aufnahme der Spannungsversorgung, der Analog-Digital-Wandler sowie der Speicher und sonstiger Schaltungen, die im Prinzip nach dem Stand der Technik bekannt sind. Beispielsweise wird auf die in der Beschreibungseinleitung genannten Druckschriften verwiesen. Das Gehäuse besitzt ferner eine digitale Zeitanzeige 11, etwa in Form einer FlüssigkristallAnzeige. Zur Aufnahme- und Wiedergabe dient eine Mikrofon-Lautsprecherkombination 12. Über ein Tastenfeld 13 können diskrete Ziffern eingegeben werden, sei es zur Zeitvorwahl oder - falls das Diktiergerät einen Miniaturrechner besitzt - zur Operatoreneingabe. Weiterhin sind Tasten 14 vorgesehen, über die Aufnahme, Wiedergabe und Löschfunktionen einstellbar sind. Das Handgerät kann zusätzlich noch eine Öse 15 besitzen, an der z.B. ein Tragriemen, eine Kette o.ä. befestigbar ist.

Bei der Ausführungsform nach Fig. 3 ist das Datenaufzeichnungsgerät in Form einer Armbanduhr 16 dargestellt, die mit einem Armband 17 versehen ist. Die Armbanduhr 16 besitzt eine Digitalanzeige 18, eine Lautsprecher-Mikrofoneinheit 19 sowie einen oder mehrere Funktionstasten 20, die beispielsweise auch als Kippschalter ausgebildet sein können, um mehrfach Einstellungen vornehmen zu können.

Alle Geräte funktionieren folgendermaßen:
Bei Niederdrücken eines Aufnahmeschalters kann die Nachricht auf den Speicher gesprochen werden. Diese Nachricht ist kodierbar, etwa über Tastenfeld 13 oder 21, d.h. jede Datenaufzeichnung kann mit einer Zeitangabe verknüpft werden. Das Datenaufzeichnungsgerät wird nicht nur wie in der Art, die in der DE 32 43 438 Al beschrieben ist, zum vorgegebenen Zeitpunkt ein Alarmsignal ausgeht, sondern etwa im Display anzeigen, daß eine Nachricht abzurufen ist. Bis diese Nachricht durch Drücken eines Wiedergabeschalters aktiviert und abgehört worden ist, bleibt die Löschfunktion gesperrt. Das Abrufen der Aufnahme zum bestimmten Zeitpunkt reaktiviert die betreffende Anzeige über das Anstehen dieser Nachricht, ferner wird die Sperrfunktion für das Löschen dieser Nachricht aufgehoben, so daß der Platz für einen neuen Termin geschaffen wird. Hierdurch wird die Kapazität des Speichers optimal ausgenutzt.

## Patentansprüche

1. Datenaufzeichnungsgerät mit ersten Mitteln zum Aufzeichnen und Abrufen von Daten, zweiten Mitteln zum Löschen von aufgezeichneten Daten, sowie Bedienelementen zum Steuern des Aufzeichnungs-, Abruf- und Löschvorganges, einer mit einem akustischen Signalgeber gekoppelten Zeitschaltuhr mit einer Zeiteinstellung, und dritten Mitteln, welche eine Aktivierung des Löschvorganges von abgespeicherten Daten von einer zusätzlich erfüllten Bedingung abhängig machen,
dadurch gekennzeichnet,
daß die zusätzliche Bedingung der vorher erfolgte Abruf der abgespeicherten und zu löschenden Daten ist, wobei die ersten Mittel so ausgebildet sind, daß mehrere Datenaufzeichnungen vorgenommen werden können, daß jede Datenaufzeichnung mit einer vorgebbaren Zeit abgespeichert ist, zu welcher der akustische Signalgeber durch eine Zeitschaltung aktiviert wird,und daß einzelne Datenaufzeichnungen individuell bis zu ihrem Abruf gegen versehentliches Löschen durch Sperren der Löschtaste oder der Löschfunktion gesperrt sind.

2. Datenaufzeichnungsgerät nach Anspruch 1, gekennzeichnet durch eine Anzeige für noch nicht abgerufene Daten.

3. Datenaufzeichnungsgerät nach einem der Ansprüche 1 und 2,
dadurch gekennzeichnet,
daß die ersten Mittel einen mit einer mit der Mikrofon-Lautsprecher-Einheit (12,19) verbundenen Analog-Digital-Wandler (A/D-Wandler) und einen damit gekoppelten Speicher für digitale Signale umfassen.

4. Datenaufzeichnungsgerät nach einem der Ansprüche 1 bis 3,
dadurch gekennzeichnet,
daß es als Handgerät (10,16) ausgebildet ist, das vorzugsweise auch durch eine Batterie oder auch durch einen Akkumulator betreibbar ist.

5. Datenaufzeichnungsgerät nach einem der Ansprüche 1 bis 4,
dadurch gekennzeichnet,
daß als Bedienelemente breite Stellgliedfunktionstasten (14,20) oder Schieber vorgesehen sind, die der Dicke oder Draufsichtbreite des Gerätes im wesentlichen entsprechen.

6. Datenaufzeichnungsgerät nach einem der Ansprüche 1 bis 5,
dadurch gekennzeichnet,
daß es mit einem Armband (17) versehen und am Handgelenk tragbar ausgebildet ist.

## Claims

1. Data recording device with first means for the recording and the retrieval of data, second means for the deletion of recorded data, as well as operating elements for controlling the recording, retrieval and deletion operation, a time switching clock possessing a time setting means connected to an acoustic signal generator and third means, which render an activation of the deletion operation of stored data dependent upon an additionally met requirement,
characterized in that
the additional requirement is the previously effected retrieval of the stored and to-be-deleted data, while the first means are designed in such a way that several data recordings can be carried out, in that each data recording is stored for a predeterminable period of time, at which the acoustic signal generator is activa ted by a time switch and in that individual data recordings are individually blocked until their retrieval against inadvertent deletion by blocking the deletion task or the deletion function.

2. Data recording device according to Claim 1,
characterized by
a display for data not retrieved yet.

3. Data recording device according to either Claim 1 or 2,
characterized in that
the first means comprise an analog-to-digital converter (A-D converter) connected with the microphone-loudspeaker unit (12,19) and a memory for digital signals connected therewith.

4. Data recording device according to any of Claims 1 to 3,
characterized in that
the same is designed as a manually operated device (10,16), which is preferably operable with the aid of a battery or also by means of an accumulator.

5. Data recording device according to any of Claims 1 to 4,
characterized in that,
as operating elements, broad actuator keys (14,20) or slide switches are provided, which essentially correspond to the thickness or top view width of the device.

6. Data recording device according to any of Claims 1 to 5,
characterized in that
the same is provided with a wrist strap and designed so as to be portable on the wrist.

## Revendications

1. Dispositif d'enregistrement de données avec des premiers moyens pour enregistrer et appeler des données, des seconds moyens pour effacer des données enregistrées ainsi que des éléments de commande pour commander le processus d'enregistrement, d'appel et d'effacement, une horloge à minuterie couplée à un donneur de signaux acoustiques et des troisièmes moyens qui fond dépendre une activation du processus d'effacement des données mémorisées d'une condition remplie en plus,
caractérisé en ce
que la condition supplémentaire est l'appel effectué préalablement des données mémorisées et à effacer, les premiers moyens étant configurés de manière telle que plusieurs enregistrements de données peuvent être effectués, que chaque enregistrement de données est mémorisé avec un temps qui peut être prédéfini, temps auquel le donneur de signaux acoustiques est activé par une commutation de temps et que différents enregistrements de données sont bloqués individuellement jusqu'à leur appel contre un effacement par erreur par le blocage de la touche d'effacement ou de la fonction d'effacement.

2. Dispositif d'enregistrement de données selon la revendication 1, caractérisé par un affichage pour des données qui n'ont pas encore été appelées.

3. Dispositif d'enregistrement de données selon l'une des revendications 1 et 2,
caractérisé en ce
que les premiers moyens comprennent un convertisseur analogique-numérique (convertisseur a/n) relié à l'unité microphone/haut-parleur (12, 19) et une mémoire qui lui est couplée pour des signaux numériques.

4. Dispositif d'enregistrement de données selon l'une des revendications 1 à 3,
caractérisé en ce
qu'il est configuré comme un appareil portatif (10, 16) qui peut de préférence également fonctionner avec une pile ou même un accumulateur.

5. Dispositif d'enregistrement de données selon l'une des revendications 1 à 4,
caractérisé en ce
que des touches de fonction larges de composant de réglage (14, 20) ou des curseurs sont prévus comme éléments de commande qui correspondent essentiellement à l'épaisseur ou à la largeur en vue de dessus du dispositif.

6. Dispositif d'enregistrement de données selon l'une des revendications 1 à 5,
caractérisé en ce
qu'il est pourvu d'un bracelet (17) et configuré portatif au poignet.
